Europäisches Patentamt

European Patent Office

Office européen des brevets

(19)

(11) Numéro de publication: **0 057 129**
**B1**

(12) # FASCICULE DE BREVET EUROPEEN

(45) Date de publication du fascicule du brevet:
02.05.85

(51) Int. Cl.⁴: **B 60 K 31/00, G 05 D 13/62**

(21) Numéro de dépôt: 82400092.1

(22) Date de dépôt: 18.01.82

(54) **Dispositif de régulation de la vitesse d'un véhicule.**

(30) Priorité: 23.01.81 FR 8101312

(43) Date de publication de la demande:
04.08.82 Bulletin 82/31

(45) Mention de la délivrance du brevet:
02.05.85 Bulletin 85/18

(84) Etats contractants désignés:
DE GB IT

(56) Documents cités:
FR - A - 2 318 756
FR - A - 2 341 452

(73) Titulaire: **AUTOMOBILES CITROEN, 62 Boulevard
Victor-Hugo, F-92200 Neuilly-sur-Seine (FR)**
Titulaire: **AUTOMOBILES PEUGEOT, 75, avenue de la
Grande Armée, F-75116 Paris (FR)**

(72) Inventeur: **Horblin, Michel, 3, Place Hérold,
F-92400 Courbevoie (FR)**

(74) Mandataire: **Michardière, Bernard et al, Cabinet
Plasseraud 84, rue d'Amsterdam, F-75009 Paris (FR)**

ACTORUM AG

## Description

L'invention est relative à un dispositif de régulation de la vitesse d'un véhicule à moteur équipé de moyens de commande manuelle, du genre pédale d'accélérateur, destinés à être actionnés par un conducteur et reliés, par des moyens de liaison, à un organe de réglage de la puissance du moteur, dispositif de régulation du genre de ceux qui comprennent:

– des moyens sensibles à un paramètre de vitesse du véhicule, propres à émettre un signal de vitesse effective;
– des moyens comparateurs pour comparer ce signal avec un signal de référence correspondant à une limite de vitesse déterminée;
– et des moyens de régulation propres à agir sur l'organe de réglage de la puissance du moteur afin de maintenir la vitesse du véhicule égale à la limite déterminée, en fonction du résultat de la comparaison effectuée par les moyens comparateurs, lorsque le dispositif de régulation est engagé, ces moyens de régulation agissant, en outre, sur les susdits moyens de liaison de telle sorte que, lorsque la régulation est engagée, le conducteur ait à maintenir les moyens de commande manuelle dans une position déterminée, généralement la position de butée fin de course puissance maximale, l'ensemble étant tel que le conducteur peut reprendre la commande du moteur dans le sens d'une diminution de la puissance, par relâchement des moyens de commande manuelle.

Des dispositifs de ce genre sont connus, par exemple, par le brevet FR 2 318 756 (N° d'enregistrement national 75 23 038) déposé le 23 juillet 1975, et sa première addition N° 2 341 452 (N° d'enregistrement national 76 04 452) déposée le 18 février 1976.

Ces dispositifs de régulation ont pour avantage de ne pratiquement pas modifier les habitudes de conduite; en effet, le pied est maintenu sur la pédale d'accélérateur lorsque la régulation est engagée, et, dès que le conducteur souhaite une décélération à l'aide du frein moteur, il lui suffit de relever le pied pour faire cesser la régulation et obtenir la décélération souhaitée avec frein moteur. Ce mode de conduite est donc sensiblement identique à la conduite habituelle au cours de laquelle le frein moteur est fréquemment obtenu par un simple levé de pied.

Toutefois, le maintien de la pédale d'accélérateur dans une position déterminée nécessite que le conducteur maintienne le pied agissant sur la pédale également dans une position déterminée; au bout d'un certain temps, il peut en résulter une lassitude; si le conducteur relève légèrement le pied, simplement pour changer de position, afin d'éviter la lassitude tout en souhaitant conserver la régulation, il peut en résulter une décélération non voulue. Les observations qui précèdent restent valables si les moyens de commande manuelle sont agencés sous une forme autre qu'une pédale d'accélérateur.

L'invention a pour but, surtout, de remédier à l'inconvénient évoqué précédemment, et de laisser au conducteur une possibilité de déplacer les moyens de commande manuelle, à partir de la position déterminée, sans risque de perturber la régulation; dans ces conditions, lorsque la régulation de vitesse est engagée, le conducteur pourra choisir la position qui lui convient le mieux.

Selon l'invention, un dispositif de régulation de la vitesse d'un véhicule à moteur, équipé de moyens de commande manuelle du genre pédale d'accélérateur, destinés à être actionnés par un conducteur et reliés par des moyens de liaison à un organe de réglage de la puissance du moteur, du genre défini précédemment, est caractérisé par le fait qu'il comporte des moyens pour définir une plage de débattement des moyens de commande manuelle à partir de la susdite position déterminée, et des moyens d'inhibition des moyens de commande manuelle agencés pour être en action lorsque:

– ces moyens de commande manuelle se trouvent dans la susdite plage (Δ);
– le dispositif de régulation est engagé.

Avantageusement, les moyens d'inhibition sont agencés pour être en action lorsque les conditions de conduite correspondent au passage des moyens de commande manuelle, à l'intérieur de la plage de débattement, d'une position associée à une puissance du moteur supérieure à celle demandée par les moyens de régulation, à une position associée à une puissance inférieure à celle demandée par ces moyens de régulation.

Le dispositif de régulation est agencé de telle sorte que lorsque les moyens de commande manuelle se trouvent en dehors de la plage de débattement, le contrôle du véhicule est repris par le conducteur dès que la puissance du moteur correspondant à la position des moyens de commande manuelle devient inférieure à celle affichée par les moyens de régulation.

La mise en marche du dispositif de régulation est assurée par des moyens de contact; des moyens sensibles à ces moyens de contact sont prévus et agencés pour donner le contrôle de l'organe de réglage de la puissance du moteur aux moyens de régulation lorsque les moyens de commande manuelle arrivent dans la plage de débattement en se déplaçant dans le sens d'une augmentation de puissance, le véhicule roulant à une vitesse inférieure à la vitesse de référence et alors que la puissance du moteur associée à la position des moyens de commande manuelle reste inférieure à celle affichée par les moyens de régulation.

Les moyens de liaison entre les moyens de commande manuelle et l'organe de réglage de la puissance du moteur peuvent être électriques et comprendre:

– des moyens pour élaborer un signal électrique de position représentant la position des moyens de commande manuelle;

– des moyens agencés pour fournir, à leur sortie, un signal représentatif de la puissance demandée au moteur et dépendant de la différence entre la vitesse de référence et la vitesse réelle;

– des moyens de comparaison des deux signaux;

– et un servo-moteur sensible au signal de sortie des moyens de comparaison, propre à commander la position de l'organe de réglage de puissance du moteur d'après ce signal de sortie.

Avec de tels moyens de liaison électriques, il est avantageux de faire comprendre, aux moyens pour déterminer la plage de débattement, des moyens électriques de seuil et des moyens pour comparer le signal représentant la position des moyens de commande manuelle avec le seuil, et pour fournir, sur leur sortie, un signal logique correspondant à deux états différents selon que les moyens de commande manuelle sont dans la plage de débattement ou en dehors de cette plage.

Avantageusement, le signal logique S présent sur la sortie des moyens pour comparer le signal de position avec le seuil, correspond à un état logique 1 lorsque les moyens de commande manuelle se trouvent dans la plage de débattement, et un état logique 0 lorsque les moyens de commande manuelle se trouvent en dehors de cette plage de débattement.

Les moyens d'inhibition des moyens de commande manuelle sont avantageusement constitués par un circuit logique formé par une combinaison de portes, ce circuit étant agencé de manière à donner, sur sa sortie, un signal logique pouvant prendre deux états, correspondant respectivement à une mise en œuvre de l'inhibition ou à une absence d'inhibition selon que les diverses conditions de conduite pour l'inhibition sont remplies ou non.

Des modes de réalisation particuliers de l'invention sont décrits ci-après avec référence aux dessins ci-annexés.

La fig. 1, de ces dessins, est un schéma d'ensemble d'un dispositif de régulation conforme à l'invention.

La fig. 2 est un schéma du circuit logique d'inhibition du dispositif de la fig. 1.

Les fig. 3a à 3e sont des représentations schématiques de diverses conditions de conduite.

La fig. 4, enfin, est un schéma d'une variante de réalisation du dispositif de régulation.

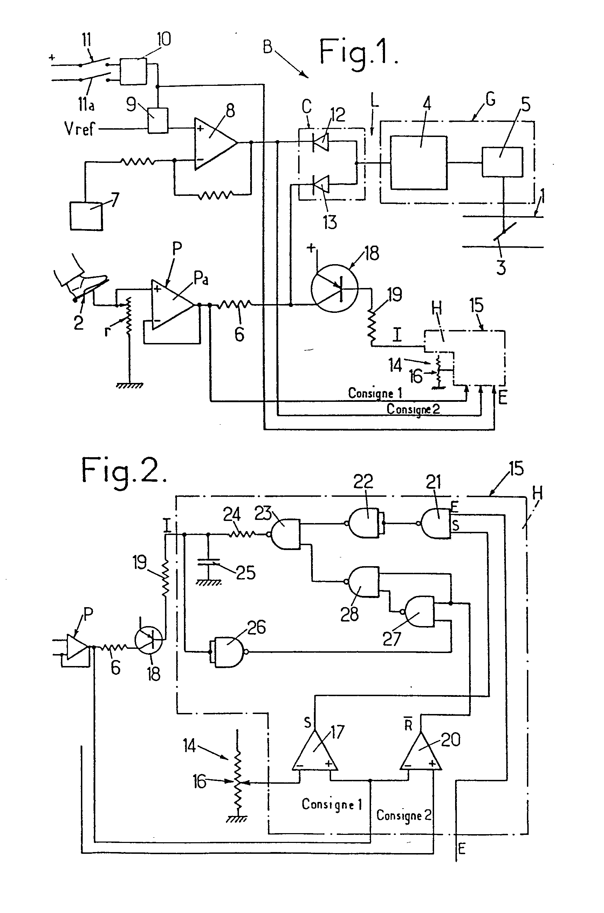

En se reportant aux dessins, notamment à la fig. 1, on peut voir un dispositif de régulation de la vitesse d'un véhicule automobile à moteur à combustion interne dont la tubulure d'admission 1 est représentée schématiquement. Ce moteur est équipé de moyens de commande manuelle formés par une pédale d'accélérateur 2 classique destinée à être actionnée par un conducteur.

La pédale d'accélérateur 2 est reliée par des moyens de liaison L à un organe de réglage de la puissance du moteur; cet organe de réglage est constitué par un papillon ou volet d'étranglement 3 classique disposé dans la tubulure 1 et pouvant tourner autour d'un axe diamétral. La puissance susceptible d'être fournie par le moteur varie dans le même sens que le degré d'ouverture du papillon 3, cette puissance étant maximale pour l'ouverture complète, et minimale pour la fermeture du papillon.

Dans le mode de réalisation du schéma de la fig. 1, les moyens de liaison L sont électriques et comprennent:

– des moyens P pour élaborer un signal électrique de position représentant la position de la pédale d'accélérateur 2;

– et un ensemble servo-moteur G propre à répondre au signal de sortie des moyens P et à communiquer au papillon 3 une position correspondant à ce signal. Ce servo-moteur G peut comprendre un amplificateur 4 et le servo-moteur rotatif 5 proprement dit, accouplé à l'axe sur lequel est calé le papillon 3. L'entrée de l'ensemble servo-moteur G est reliée à la sortie des moyens P par l'intermédiaire de conducteurs électriques, d'un comparateur C dont il sera question plus loin, et d'une résistance électrique 6.

Les moyens P peuvent comprendre un potentiomètre r, commandé par la pédale 2, et branché sur une entrée d'un amplificateur Pa, comme montré sur la fig. 1.

Le dispositif de régulation comprend des moyens 7 sensibles à un paramètre de vitesse du véhicule, propres à émettre un signal de vitesse effective. Ces moyens sensibles 7 peuvent être constitués, notamment, par un capteur de vitesse, par exemple un capteur de la vitesse de rotation d'une roue de véhicule, lequel capteur fournit, sur sa sortie, un signal impulsionnel à un convertisseur fréquence tension qui délivre une tension électrique dépendant de la vitesse effective du véhicule. Des moyens comparateurs 8 sont prévus pour comparer le signal fourni par le capteur de vitesse 7 avec un signal de référence $V_{ref}$ correspondant à une limite de vitesse déterminée.

Le signal de référence $V_{ref}$ peut être fourni par une mémoire (non représentée) dans laquelle est stockée une tension électrique correspondant à une vitesse déterminée. Cette tension électrique peut être introduite dans la mémoire à partir du capteur de vitesse 7 par un circuit (non représenté) propre à envoyer, sur l'entrée de la mémoire la tension fournie par le capteur 7 lorsque le véhicule roule à une vitesse correspondant à la vitesse limite que l'on veut introduire dans la mémoire.

Le signal $V_{ref}$ est envoyé sur une entrée des moyens comparateurs 8 par l'intermédiaire d'une porte 9 dont l'ouverture et la fermeture sont commandées par une bascule 10 dont la sortie, branchée sur l'entrée de déclenchement de la porte 9 peut prendre deux états M/A, correspondant respectivement à la mise en marche (M) du dispositif de régulation (avec ouverture de la porte 9) et à la mise hors service (état A) du dispositif de régulation (avec fermeture de la porte 9). Le passage de la sortie de la bascule à l'état «marche» est commandé par la fermeture fugitive d'un contact électrique 11 dont une borne est reliée à une entrée de la bascule 10 et dont l'autre borne est reliée à une source d'alimentation électrique.

Si le contact 11 est fermé à nouveau, alors que la sortie de la bascule 10 est à l'état «marche», cette sortie reste sur cet état «marche».

Le passage de la sortie de la bascule 10 à l'état «arrêt» est commandé par la fermeture d'un contact 11a.

Les moyens comparateurs 8 peuvent être formés par un amplificateur opérationnel qui fournit, sur sa sortie, un signal dépendant de la différence entre le signal de référence $V_{ref}$, et le signal fourni par le capteur 7.

Le dispositif de régulation comprend, en outre, des moyens de régulation B propres à agir sur l'organe de réglage de la puissance du moteur afin de maintenir la vitesse du véhicule égale à la limite déterminée $V_{ref}$.

Ces moyens de régulation comprennent l'ensemble servo-moteur G déjà décrit, dont l'entrée est reliée à la sortie des moyens comparateurs 8, par le circuit comparateur C. Ce circuit comparateur C appartenant aussi aux moyens L, est formé par deux diodes 12, 13, dont les anodes sont reliées l'une à l'autre, ainsi qu'à l'entrée de l'ensemble servo-moteur G. Les cathodes des diodes 12, 13 sont reliées, respectivement, à la sortie des moyens comparateurs 8 et à la sortie des moyens P (par l'intermédiaire de la résistance 6).

Les moyens comparateurs C donnent, sur leur sortie, et donc sur l'entrée de l'ensemble G, la plus faible des deux tensions présentes sur les cathodes des diodes 12 et 13.

On voit que, lorsque la tension présente sur la cathode de la diode 12, (en provenance des moyens comparateurs 8) est inférieure à celle provenant des moyens P, la position du papillon 3 est commandée par la tension provenant des moyens 8.

Lorsque le dispositif de régulation est engagé, l'action des moyens G et plus spécialement du circuit comparateur C a pour effet que le conducteur doit maintenir la pédale d'accélérateur 2 enfoncée au maximum (position pleins gaz); à cette position correspond, à la sortie des moyens P, un signal de tension maximale; dans ces conditions, le signal de sortie des moyens comparateurs 8 sera toujours inférieur ou au plus égal au signal de sortie des moyens P. On comprend ainsi que la commande de la position du papillon 3 sera bien assurée par le signal provenant des moyens comparateurs 8.

Lorsque le dispositif de régulation est en action, et que le conducteur relève le pied de la pédale d'accélérateur 2, l'amplitude du signal fourni sur la sortie des moyens P diminue. Lorsque le signal sur la cathode de la diode 13 devient inférieur à celui présent sur la cathode de la diode 12, la commande de l'ensemble servo-moteur G est assurée par le signal présent sur la cathode de la diode 13, c'est-à-dire par le signal fourni par les moyens P, et donc par la pédale 2.

On voit que le conducteur reprend ainsi le contrôle du moteur, dans le sens d'une diminution de la puissance, par simple relâchement de la pédale de commande 2 (rappelée vers la position de puissance minimale par des moyens élastiques non représentés).

Il est possible de prévoir des moyens de contact électrique formant butée fin de course dans le sens de la puissance maximale pour la pédale 2; lorsque la régulation est engagée et que le conducteur souhaite obtenir rapidement la puissance maximale du moteur, il lui suffira d'exercer une pression plus forte sur la pédale 2 pour franchir la butée fin de course et actionner un contact électrique qui mettra hors service la régulation, le papillon 3 prendra alors sa pleine ouverture et le conducteur disposera de la puissance maximale (voir notamment brevet FR N° 2 318 756 déjà cité).

Il peut arriver, lorsque la régulation est engagée et maintient le véhicule à une vitesse limite déterminée, que le conducteur modifie légèrement la position du pied sur la pédale d'accélérateur 2, par exemple pour éviter un engourdissement ou une trop grande lassitude provoquée par le maintien de la pédale 2 en butée fin de course. Dans un tel cas, si la pédale 2 vient à prendre une position à laquelle correspond un degré d'ouverture du papillon 3 plus faible (et donc une puissance du moteur plus faible) que celle commandée par la régulation, le signal provenant des moyens P sera inférieur à celui provenant des moyens comparateurs 8 et l'ensemble servomoteur G va faire prendre au papillon 3 la position correspondant à celle de la pédale 2. Il en résultera une décélération du véhicule alors que le conducteur ne souhaitait pas modifier la vitesse du véhicule, mais simplement adopter une position plus confortable pour le pied agissant sur la pédale 2.

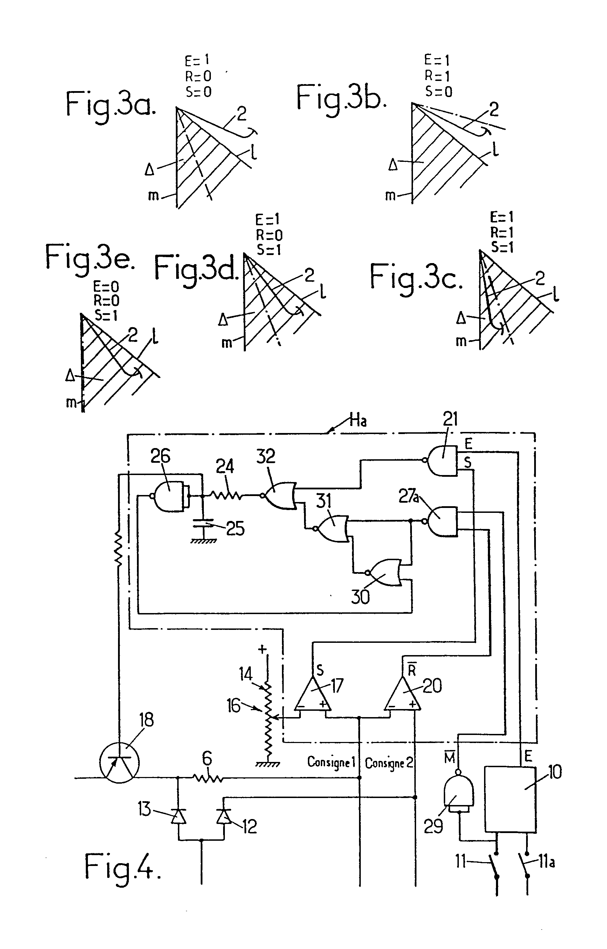

Pour éviter un tel inconvénient, selon l'invention, des moyens 14 (fig. 2) sont prévus pour définir une plage de débattement Δ (fig. 3a à 3e) des moyens de commande manuelle 2 à partir de la susdite position déterminée (position «pleins gaz»); des moyens d'inhibition 15 des moyens de commande manuelle 2 sont, en outre, prévus et propres à empêcher l'action des moyens de commande manuelle 2 lorsqu'ils se trouvent dans la susdite plage de débattement Δ et, qu'en outre, le dispositif de régulation est engagé, et que les conditions de conduite sont telles que l'inhibition ne présente pas d'inconvénient.

Les moyens 14 pour définir la plage de débattement peuvent être constitués, comme représenté sur les fig. 1 et 2, par un diviseur potentiométrique 16 déterminant un seuil de tension envoyé sur une entrée d'un comparateur 17, dont l'autre entrée reçoit le signal fourni par les moyens P.

La plage de débattement ainsi déterminée pour la pédale 2 est représentée par des zones hachurées sur les fig. 3a ... 3e. Une limite m de cette zone Δ correspond à la position «pleins gaz» de la pédale 2, tandis que l'autre limite 1 correspond à la position de la pédale 2 qui produit un signal à la sortie des moyens P égal au signal déterminé par le diviseur potentiométrique 16.

Le comparateur 17 est agencé de manière à fournir sur sa sortie un signal logique S susceptible de prendre deux états correspondant respectivement aux deux valeurs logiques 0 et 1.

Avantageusement, l'ensemble est agencé de telle sorte que le signal S corresponde à un état 1 lorsque la pédale 2 occupe une position située dans la plage $\Delta$ (signal à la sortie des moyens P supérieur à celui fourni par le diviseur potentiométrique 16).

Lorsque la pédale 2 se trouve en dehors de la plage $\Delta$, c'est-à-dire lorsque la pédale 2 est relativement peu enfoncée et se trouve au-dessus de la limite 1, le signal ou variable logique S est à l'état 0.

Dans l'exemple de réalisation envisagé, les moyens 14 pour définir la plage de débattement se trouvent simplifiés du fait qu'il suffit de définir un seuil correspondant à la limite inférieure 1 de cette plage de débattement.

Il est clair, cependant, qu'il serait possible de déterminer les deux limites de la plage de débattement $\Delta$, pour le cas où la position dans laquelle doit être maintenue la pédale 2, lors de la régulation, se trouverait à l'intérieur de cette plage $\Delta$ et non pas à la limite supérieure comme dans l'exemple de réalisation envisagé.

Les moyens d'inhibition 15 sont constitués par un circuit logique H représenté sur la fig. 2.

Avant de décrire ce circuit logique, on va étudier les conditions de conduite du véhicule pour lesquelles l'inhibition de l'action des moyens de commande manuelle 2 peut, ou non, avoir lieu.

Le circuit logique H prélève, comme visible sur la fig. 1, les trois paramètres de conduite suivants:

– consigne donnée par la pédale d'accélérateur 2 (ce paramètre est prélevé par une liaison sur la sortie des moyens P, et envoyé sur l'entrée consigne 1);
– consigne donnée par les moyens de régulation (cette consigne est formée par le signal fourni à la sortie des moyens comparateurs 8 et envoyée, par un conducteur de liaison, sur l'entrée consigne 2 des moyens d'inhibition 15, fig. 1);
– l'état E hors-service ou en service des moyens de régulation, prélevé par un conducteur de liaison branché sur la sortie de la bascule 10 et relié à une entrée des moyens d'inhibition 15.

Le circuit logique H est agencé pour effectuer les comparaisons suivantes:

– la consigne fournie aux moyens de régulation (consigne 2) est comparée avec la consigne fournie par la pédale d'accélérateur 2 (consigne 1);
le résultat de cette comparaison permet de définir une variable logique R. L'ensemble est tel que cette variable logique R prend la valeur logique 1 lorsque la consigne fournie par les moyens de régulation (à la sortie du comparateur 8) est inférieure ou égale à la consigne de la pédale d'accélérateur; lorsque la consigne des moyens de régulation est supérieure à la consigne de la pédale, la variable logique R vaut 0.

Le tableau donné ci-après résume ces explications:

| | Consigne 2 > Consigne 1 (compara- teur 8) (pédale 2) | Consigne 2 $\leqslant$ Consigne 1 (compara- teur 8) (pédale 2) |
|---|---|---|
| R | 0 | 1 |

– la consigne de la pédale 2 est comparée avec la plage de débattement $\Delta$ évoquée précédemment, et plus particulièrement avec le seuil 1 pour l'exemple de réalisation envisagé. La variable logique S peut être définie à l'aide des résultats de cette comparaison. L'ensemble est tel que cette variable logique S vaut 1 lorsque la pédale d'accélérateur 2 se trouve dans la plage $\Delta$, c'est-à-dire lorsque la consigne de la pédale 2 correspond à une position de la pédale entraînant une ouverture du papillon 3 supérieure à celle obtenue pour la limite 1.

Les valeurs prises par la variable logique S sont résumées dans le tableau ci-après:

| | Consigne 1 > 1 (pédale 2 dans la plage $\Delta$) | Consigne 1 $\leqslant$ 1 (pédale 2 en dehors de $\Delta$) |
|---|---|---|
| S | 1 | 0 |

Enfin, la variable logique E sert à caractériser l'état hors service ou en service des moyens de régulation; l'ensemble est agencé de telle sorte que cette variable logique E prenne la valeur 1 lorsque les moyens de régulation sont en service, et la valeur 0 lorsque les moyens de régulation sont hors service. Le tableau suivant résume ces explications:

| | Régulation en service | Régulation hors service |
|---|---|---|
| E | 1 | 0 |

L'ensemble est agencé de telle sorte que lorsque les moyens de régulation de vitesse sont hors service, la variable R prend toujours la valeur 0. Pour cela, la grandeur analogique représentant la consigne des moyens de régulation (fournie à la sortie du comparateur 8) prend une valeur maximale lorsque les moyens de régulation sont hors service; de ce fait, la consigne des moyens de régulation est supérieure à la consigne de pédale 2 et le comparateur C sélectionnera toujours, dans ce cas, la consigne de pédale 2 (inférieure) pour faire fonctionner l'ensemble servo-moteur G d'après cette consigne.

Il convient, à ce sujet, de préciser que la position du papillon 3 est d'autant plus ouverte que la tension de consigne, sélectionnée par les moyens comparateurs C et envoyée sur l'ensemble G, est grande.

L'inhibition de la pédale d'accélérateur 2 est obtenue en portant le potentiel, à la sortie des moyens P, à sa valeur maximale à l'aide d'un transistor 18 commandé par le circuit logique H des moyens d'inhibition.

Comme visible sur la fig. 1, ce transistor 18, du type PNP, a son émetteur branché à une source de tension positive et son collecteur relié à la cathode de la diode 13. La base de ce transistor 18 est reliée, par l'intermédiaire d'une résistance 19, à la sortie du circuit logique H.

Lorsque l'inhibition est souhaitée, le circuit logique H fournit sur sa sortie un signal rendant conducteur le transistor 18, de telle sorte que le collecteur de ce transistor soit sensiblement à la même tension que l'émetteur, ce qui correspond au potentiel de valeur maximale sur la cathode de la diode 13. Dans ces conditions, le circuit comparateur C sélectionnera toujours le signal présent sur la cathode de la diode 12 pour faire fonctionner l'ensemble G d'après la consigne fournie par les moyens de régulation.

Autrement dit, si l'on désigne par I la variable de sortie du circuit logique attaquant la base du transistor 18, on peut définir deux valeurs logiques pour cette variable I.

I = 0: le transistor 18 est bloqué et la consigne de pédale 2 fournie à la sortie des moyens P est validée et attaque la cathode de l'anode 13;

I = 1: le transistor 18 est rendu conducteur et applique le potentiel maximal sur la cathode de l'anode 13, de telle sorte que la consigne de la pédale 2 est inhibée.

La variable de sortie I du circuit logique H dépend des trois variables S, R, E évoquées précédemment, chacune de ces variables pouvant prendre la valeur logique 0 ou 1.

Huit cas différents pourront donc se présenter; il convient de préciser les valeurs de la variable de sortie I pour chacun de ces cas.

Etude des huit cas différents.

I. – On examine tout d'abord les cas pour lesquels E = 0, c'est-à-dire les quatre cas (S = 1, R = 1; S = 1, R = 0; S = 0, R = 1; S = 0, R = 0) où les moyens de régulation de la vitesse sont hors service (la bascule M/A 10 de la fig. 1 est à l'état arrêt A).

Les moyens de régulation étant hors service, il faut que la commande du papillon 3 soit assurée par la pédale d'accélérateur 2. La consigne de pédale doit donc être validée et la variable I doit prendre la valeur 0.

Le régulateur étant hors service, la variable logique R est normalement à la valeur 0 comme expliqué précédemment.

Toutefois, des états instables ou transitoires peuvent se produire pour lesquels R = 1 et E = 0. De tels états peuvent se produire en raison des temps de réponse différents pour E et R, E passant de 1 à 0 plus rapidement que R.

II. – On examine les cas pour lesquels E = 1, la régulation de vitesse est alors en service.

Quatre cas sont possibles correspondant aux quatre combinaisons de valeurs logiques des deux variables S et R.

1. R = 1.

La consigne fournie par les moyens de régulation, à la sortie du comparateur 8, est inférieure à celle fournie par la pédale d'accélérateur 2. Cette situation est schématiquement représentée sur les fig. 3b et 3c, où la consigne sur la sortie du comparateur 8 est représentée par un trait mixte.

La fig. 3b correspond à R = 1, S = 0, c'est-à-dire que la pédale se trouve en dehors de la plage de débattement Δ.

La fig. 3c correspond à R = 1, S = 1. Les positions relatives de la consigne de régulation et de la pédale sont les mêmes que dans le cas de la fig. 3b, mais, cette fois, la consigne de pédale se trouve à l'intérieur de la plage de débattement Δ.

Dans ces deux cas de figure, du fait que la consigne des moyens de régulation fournie à la sortie des comparaterus 8 est inférieure à la consigne de la pédale 2, les moyens comparateurs C fourniront à l'entrée de l'ensemble G la consigne des moyens de régulation.

Il est indifférent que la consigne de pédale 2 soit, ou non, validée, puisque dans tous les cas des fig. 3b et 3c, les moyens comparateurs C prennent en compte la consigne des moyens de régulation.

2. R = 0.

D'après les explications données précédemment, cela signifie que la consigne des moyens de régulation est supérieure à celle de la pédale 2.

Les deux cas de figures correspondant à S = 0 et S = 1, sont schématiquement représentés par les fig. 3a et 3d.

Dans le cas de la fig. 3a, S = 0, c'est-à-dire que la pédale 2 est en dehors de la plage de débattement Δ. La consigne de pédale doit être validée (donc I = 0) de telle sorte que la commande du papillon 3 soit assurée par la pédale 2 et le conducteur; ce dernier doit, en effet, conduire normalement son véhicule dans tous les cas pour lesquels il demande moins d'ouverture de papillon que les moyens de régulation de vitesse et pour lesquels la pédale 2 n'a pas franchi le seuil 1 et ne se trouve pas dans la plage Δ.

La fig. 3d correspond au cas où la consigne de pédale d'accélérateur se trouve dans la plage Δ et correspond à un degré d'ouverture du papillon 3 (donc une puissance du moteur) inférieure à la consigne des moyens de régulation, représentée par le trait mixte.

Pour déterminer s'il convient d'inhiber, ou non, la pédale d'accélérateur 2, il faut tenir compte de la manière dont on est arrivé à ce cas de fig. 3d.

Tout d'abord, on peut parvenir à ce cas de fig. 3d en venant du cas de fig. 3a. Le conducteur a alors enfoncé la pédale d'accélérateur et franchi la limite 1 pour entrer dans la plage de débattement Δ; la consigne de pédale reste, cependant, inférieure à la consigne des moyens de régulation. Pour ce passage du cas de fig. 3a au cas de fig. 3d, la consigne de pédale ne doit pas être inhibée car la consigne des moyens de régulation lui reste supérieure et le contrôle du véhicule doit rester au conducteur tant que les moyens de régulation n'ont pas demandé une fermeture du papillon 3; une telle demande de fermeture du papillon 3 par les moyens de régulation signifie, en effet, que la vitesse limite a été atteinte et même dépassée.

Le cas de fig. 3d peut être obtenu à partir du cas de fig. 3c. Cela signifie, alors, que le conducteur a relevé un peu le pied en restant dans la plage de débattement Δ. C'est dans ce cas précisément que doit intervenir, pour le confort de conduite, l'inhibition de la consigne de pédale 2 afin que le changement de position de la pédale 2, à l'intérieur de la plage Δ, ne soit pas pris en compte et ne produise pas une décélération du véhicule, alors que le conducteur ne souhaite pas une telle décélération. Le changement de position de la pédale 2 correspond simplement à une recherche d'une meilleure position du pied par le conducteur.

On peut également arriver au cas de fig. 3d à partir d'un cas de fig. 3e correspondant à un état envisagé précédemment: R = 0, S = 1 et E = 0 (moyens de régulation hors service).

Lorsque le conducteur met en service la régulation de vitesse, on passe du cas de fig. 3e au cas de fig. 3d. A ce moment, la consigne de pédale 2 est forcément inférieure à celle des moyens de régulation puisque, à l'instant initial de la mise en service des moyens de régulation, la consigne de ces moyens de régulation part de la valeur maximale comme expliqué précédemment. Lors de ce passage du cas de fig. 3e au cas de fig. 3d, il ne faut pas que la consigne de pédale soit inhibée, sinon le papillon des gaz 3 s'ouvrirait à fond momentanément.

En conclusion, l'inhibition de la pédale d'accélérateur 2 ne peut se faire que si le conducteur a préalablement positionné la pédale 2 dans la plage de débattement Δ et qu'ensuite la consigne des moyens de régulation est devenue plus petite que celle de la pédale 2.

Pour les deux cas de fig. 3b, 3c, apparus comme indifférents à l'égard de l'inhibition de la pédale 2, il est souhaitable de réaliser la transition validation → inhibition de la pédale 2 avec la transition cas de fig. 3b → cas de fig. 3c de façon que la consigne issue des moyens de comparaison ne puisse être affectée d'un phénomène transitoire quelconque (en effet, dans les cas de fig. 3b et 3c, la consigne des moyens de régulation est sélectionnée de toute façon).

On en déduit ainsi le tableau des valeurs prises par la variable logique I en fonction des valeurs des variables logiques E, S et R.

Les valeurs de la variable I sont portées dans les cases du tableau donné ci-après.

Les flèches figurant sur ce tableau sont destinées à schématiser les transitions qui conduisent, ou non, à l'inhibition (I = 1 correspond à une inhibition de la pédale 2; I = 0 correspond à une validation de la pédale 2).

| S, R    E | S = 0   R = 0 | S = 0   R = 1 | S = 1   R = 1 | S = 1   R = 0 |
|---|---|---|---|---|
| E = 0 | 0 | 0 | 0 | 0 |
| E = 1 | 0 | 0 | 1 → 1 | ↘ 0 |

Si l'on désigne par $I_t$ la valeur de la variable logique I à l'instant t et par $I_{t-1}$ la valeur de cette variable à l'instant précédant le changement d'état de l'une au moins des variables d'entrée, on peut écrire l'équation de la variable I de la manière suivante, en utilisant l'algèbre de Boole:

$$I_t = E.S\,(R + \overline{R}\,I_{t-1}) \text{ ou } \overline{I}_t = \overline{E.S\,(\overline{R} + R\,I_{t-1})}$$

La fig. 2 illustre le circuit logique propre à donner, sur sa sortie, la variable logique $I_t$ satisfaisant à la relation définie précédemment. Ce circuit logique comprend le comparateur 17 déjà décrit fournissant, sur sa sortie, la variable S et un deuxième comparateur 20 dont une entrée reçoit le signal de consigne de la pédale (consigne 1) et l'autre entrée reçoit le signal de consigne des moyens de régulation (consigne 2). Ce comparateur 20 fournit sur sa sortie un signal correspondant à la variable R (R complémentée).

L'entrée du circuit logique sur laquelle est envoyé la variable E est reliée à une entrée d'une porte ET-NON 21; une autre entrée de cette porte 21 est reliée à la sortie du comparateur 17 et reçoit la variable S. La porte 21, donne sur sa sortie, le complément de E.S c'est-à-dire $\overline{E.S}$. La sortie de la porte 21 est reliée en parallèle à deux entrées d'une porte ET-NON 22 qui travaille en porte inverseuse et fournit, sur sa sortie, le complément de son entrée, c'est-à-dire la variable E.S. La sortie de cette porte 22 est reliée à une entrée d'une autre porte NON-ET 23.

La sortie de la porte 23 est reliée, par l'intermédiaire des deux résistances 24, 19, à la base du transistor 18. Une capacité 25 est branchée en dérivation entre la masse et le conducteur reliant la résistance 24 à la résistance 19.

Le circuit R.C. 24-25 sert à retarder l'établissement du signal de sortie pour éviter qu'un transitoire apparaisse; la propagation du front montant (ou descendant) d'une des variables d'entrée lorsqu'elle change d'état est plus longue à travers une succession de portes logiques qu'à travers une autre succession de portes.

Une porte ET-NON 26, utilisée en porte inverseuse, a ses deux entrées reliées en parallèle, à la partie de conducteur électrique comprise entre la résistance 24 et la résistance 19. La porte ET-NON 26 fournit, sur sa sortie, le signal correspondant à $I_{t-1}$.

La sortie de la porte 26 est branchée sur une entrée d'une porte NON-ET 27. Une autre entrée de cette porte 27 est reliée à la sortie du comparateur 20.

La porte 27 donne, sur sa sortie, le signal $\overline{R}.\overline{I_{t-1}}$ $= R + \overline{I_{t-1}}$. La sortie de la porte NON-ET 27 est reliée à une entrée d'une porte NON-ET 28. Une autre entrée de cette porte 28 est reliée à la sortie du comparateur 20, pour recevoir le signal $\overline{R}$.

La sortie de la porte NON-ET 28 fournit le signal $\overline{(R + \overline{I_{t-1}}).\overline{R}}$.

La sortie de la porte NON-ET 28 est reliée à une deuxième entrée de la porte NON-ET 23. La sortie de cette porte NON-ET 23 fournit le signal $I_t$ = E.S. (R + R $I_{t-1}$).

Le fonctionnement du dispositif de régulation de vitesse conforme à l'invention résulte immédiatement des explications précédentes.

Lorsque le dispositif de régulation est hors service, les moyens d'inhibition 15 de la pédale 2 n'interviennent pas, et la conduite du véhicule s'effectue normalement.

Lorsque le dispositif de régulation de la vitesse est mis en action, le conducteur enfonce la pédale 2 au maximum jusqu'à la butée fin de course.

En cours de régulation, si le conducteur, par suite d'une lassitude, relève légèrement le pied pour chercher une position plus confortable (passage du cas de fig. 3c au cas de fig. 3d) en restant dans la plage de débattement Δ, mais en franchissant la position correspondant à la consigne des moyens de régulation, les moyens d'inhibition 15 interviennent et empêchent une décélération, non souhaitée par le conducteur.

Si le conducteur souhaite effectivement une décélération du véhicule par frein moteur, il lui suffit de relever le pied de telle sorte que la pédale 2 sorte de la plage Δ et franchisse la limite 1 dans le sens de la fermeture, pour que le contrôle du véhicule soit repris par le conducteur.

On considère, maintenant, la variante de réalisation de la fig. 4.

Lorsque le véhicule roule à une vitesse inférieure à la vitesse limite (vitesse de référence), la régulation étant en action, si les moyens d'inhibition de la consigne de pédale 2 ne sont pas actifs, le contrôle de la vitesse du véhicule est assuré à partir de la pédale 2. Dans ce cas, le conducteur du véhicule doit accélérer jusqu'à ce que la vitesse limite, ou vitesse de référence, soit atteinte par le véhicule avant de pouvoir relever le pied dans la plage de débattement Δ prévue avec l'assurance de ne pas ralentir.

En effet, tant que le voisinage de la vitesse de référence n'est pas atteint, les moyens de régulation élaborent un signal de consigne correspondant à l'ouverture maximale du papillon 3; l'ensemble est, en effet, agencé de telle sorte que le maximum de puissance soit disponible pour la régulation, c'est-à-dire que pour une vitesse inférieure à la vitesse de référence, les moyens de régulation commandent une ouverture complète du papillon 3.

Ainsi, tant que le voisinage de la vitesse de référence n'est pas atteint, le signal de consigne de la pédale 2 reste inférieur ou au plus égal au signal de consigne des moyens de régulation et les moyens d'inhibition ne pourront entrer en action qu'après l'instant où la consigne de la pédale 2 est devenue supérieure à celle des moyens de régulation (cas de fig. 3c).

Ces positions relatives (fig. 3c) sont obtenues lorsque le véhicule atteint, au cours d'une accélération commandée par la pédale 2, la vitesse de référence; les moyens de régulation commandent alors une position du papillon 3 qui n'est plus celle de la pleine ouverture mais celle correspondant à la vitesse souhaitée ou à une vitesse légèrement inférieure si la vitesse souhaitée a été légèrement dépassée.

Finalement, pour pouvoir faire intervenir les moyens d'inhibition, le conducteur devra surveiller son indicateur de vitesse de manière à atteindre la vitesse de référence, en agissant sur la pédale 2.

Une telle manœuvre peut paraître fastidieuse lorsqu'elle nécessite une accélération prolongée.

La variante de réalisation de la fig. 4 prévoit l'introduction d'une fonction supplémentaire dans le circuit logique d'inhibition $H_a$ pour résoudre ce problème.

Cette fonction permet au conducteur du véhicule qui enfonce la pédale d'accélérateur 2 au-delà du seuil (alors que le véhicule roule encore en-dessous de la vitesse limite ou de référence) de donner la commande du papillon des gaz 3 aux moyens de régulation par une impulsion sur le contact de marche 11 du dispositif de régulation de vitesse, quel que soit l'état (marche ou arrêt) du dispositif de régulation de vitesse à ce moment-là. Le conducteur du véhicule garde toujours la possibilité de récupérer la commande du papillon 3 en relevant le pied de telle sorte que la pédale d'accélérateur sorte de la plage Δ de débattement libre.

Cette fonction logique supplémentaire doit donc prendre l'état du contact de marche 11 comme paramètre supplémentaire; ce paramètre

est désigné par la lettre M qui vient s'ajouter aux paramètres E, S et R évoqués précédemment.

On agence l'ensemble de telle sorte que ce paramètre M prenne la valeur logique 1 lorsque le contact 11 est actif, c'est-à-dire fermé; M prend la valeur 0 lorsque le contact est au repos, c'est-à-dire ouvert.

Les huit cas possibles étudiés précédemment, correspondant aux diverses combinaisons de valeurs logiques des paramètres E, S et R, se dédoublent par suite de l'addition du paramètre supplémentaire M qui peut prendre deux valeurs.

I. E = 0. Le dispositif de régulation est hors service, la sortie de la bascule 10 étant à l'état A arrêt.

Si M = 0, c'est-à-dire si le contact 11 reste au repos, il n'y a pas de changement par rapport aux divers cas étudiés précédemment pour E = 0. Le contrôle du véhicule doit rester au conducteur de ce véhicule et l'inhibition de la pédale 2 ne doit pas avoir lieu; la variable logique I, à la sortie du circuit logique $H_a$, qui commande le transistor 18, est égale à 0.

M = 1 correspond à la fermeture du contact 11 qui va produire le changement d'état de la sortie de la bascule 10 arrêt → marche et donc le passage de la variable E de la valeur 0 à la valeur 1.

L'état M = 1, E = 0 est donc un état transitoire enregistré par le circuit logique $H_a$ juste avant le passage de E de la valeur 0 à la valeur 1.

On agence l'ensemble de telle sorte que pour ce cas, la variable logique I = 0.

II. E = 1. Le dispositif de régulation de vitesse est en service et la sortie de la bascule 10 est sur l'état marche.

1. M = 1. C'est le cas pour lequel le contact 11 est fermé alors que le dispositif de régulation est déjà en service.

Dans ce cas, on souhaite que l'action de la pédale 2 soit inhibée pour que la commande du papillon 3 soit assurée par les moyens de régulation (même si la vitesse limite n'a pas encore été atteinte), lorsque la pédale 2 est entrée dans la plage de débattement Δ.

Ainsi, lorsque la variable S = 1 (pédale 2 dans la plage Δ) → I = 1 (l'inhibition de la pédale 2 doit avoir lieu); lorsque S = 0 (pédale 2 en dehors de la plage Δ) → I = 0.
2. M = 0. Le contact 11 est ouvert.
a) Si S = 0 (pédale 2 en dehors de la plage Δ), l'inhibition ne doit pas avoir lieu, ce qui implique I = 0.

b) S = 1. La pédale 2 est dans la plage de débattement Δ.

Si R = 1, c'est-à-dire si la consigne fournie par le comparateur 8 aux moyens de régulation est inférieure à la consigne de pédale 2, il est indifférent que l'inhibition de la pédale ait lieu ou non puisque la commande du papillon 3 sera assurée par la consigne des moyens de régulation. On agence l'ensemble de telle sorte que I = 1, c'est-à-dire que la pédale 2 est inhibée.

Si R = 0, c'est-à-dire si la consigne des moyens de régulation est supérieure à la consigne de pédale 2, il convient d'examiner à partir de quelle configuration précédente on est arrivé à la situation considérée, comme cela a déjà été fait pour le cas où la fonction M supplémentaire n'était pas introduite.

Lorsque la configuration antérieure correspond à R = 0 et S = 0 (fig. 3a) ou à R = 1 et S = 1 (cas de fig. 3c), les valeurs prises par la variable I pour la configuration envisagée sont les mêmes que celles prises pour le cas où la fonction supplémentaire n'est pas introduite, c'est-à-dire que:

I = 0 lorsque la configuration envisagée provient de la fig. 3a,
I = 1 lorsque la configuration envisagée provient de la fig. 3c.

Si la configuration antérieure correspond à E = 1, M = 1, S = 1, R = 0, on peut faire l'analyse suivante: M est passé de la valeur 1, pour ce cas antérieur, à la valeur 0 pour le cas considéré, ce qui signifie que le contact 11 a été relâché entre le cas antérieur et le cas considéré. Le cas antérieur correspondait à une inhibition puisque S = 1 et M = 1. Le conducteur du véhicule ayant souhaité la mise en œuvre de cette inhibition, celle-ci doit se maintenir après le relâchement du contact 11, lorsque M devient égal à 0. Donc, pour ce cas, I = 1 (inhibition active).

Si le cas antérieur correspond à E = 0, M = 1, S = 1, R = 0, cela signifie que le dispositif de régulation était hors service (E = 0) et que le conducteur du véhicule a appuyé sur le contact 11 pour mettre en service la régulation; le circuit logique $H_a$ a enregistré le retour de M de la valeur 1 à la valeur 0 avant que la variable logique E ne soit passée de 0 à 1. On se trouve donc dans un cas transitoire menant à E = 1, M = 0; on agence l'ensemble de telle sorte que I = 0.

Le nouveau tableau des états de la variable I est le suivant:

| E, M \ S, R | S = 0  R = 0 | S = 0  R = 1 | S = 1  R = 1 | S = 1  R = 0 |
|---|---|---|---|---|
| E = 0 M = 0 | 0 | 0 | 0 | 0 |
| E = 0 M = 1 | 0 | 0 | 0 | 0 |

| E, M \ S, R | S = 0  R = 0 | S = 0  R = 1 | S = 1  R = 1 | S = 1  R = 0 |
|---|---|---|---|---|
| E = 1 M = 1 | 0 | 0 | 1 | 1 |
| E = 1 M = 0 | 0 | 0 | 1 ⟶ 1 | 0 |

La fonction logique $I_t$, prenant les valeurs indiquées dans le tableau en fonction des valeurs des paramètres E, S, R et M, peut s'écrire, par application de l'algèbre de Boole:

$$I = S.E.(M + R + \overline{M}.\overline{R}.I_{t-1}).$$

$I_{t-1}$ correspond à l'état de la variable I avant le changement d'état d'une des variables d'entrée.

La fig. 4 montre le circuit logique $H_a$ permettant d'obtenir, sur sa sortie, la fonction logique indiquée ci-dessus.

Les éléments de ce circuit logique $H_a$ identiques à des éléments déjà décrits avec référence à la fig. 2, sont désignés par les mêmes références numériques et leur description n'est pas reprise.

Une entrée supplémentaire est prévue sur le circuit logique $H_a$, cette entrée étant branchée sur la sortie du contact 11 par l'intermédiaire d'une porte inverseuse 29. Ainsi, l'entrée correspondante du circuit $H_a$ reçoit le paramètre $\overline{M}$ (M complémenté). Cette entrée est reliée à une borne d'entrée d'une porte NON-ET 27a; une autre entrée de cette porte 27a reçoit le paramètre $\overline{R}$ provenant de la sortie du comparateur 20. Le signal présent sur la sortie de la porte 27a correspond à $\overline{\overline{M}.\overline{R}} = M + R$.

La sortie de la porte 27a est reliée à une entrée d'une porte NON-OU 30. Une autre entrée de la porte 30 est branchée à la sortie de la porte 26 et reçoit le signal $\overline{I}_{t-1}$.

La porte 30 donne, sur sa sortie, un signal logique correspondant à:

$$\overline{\overline{M + R} + \overline{I}_{t-1}} = (M + R) . I_{t-1} = \overline{M} . \overline{R} . I_{t-1}$$

La sortie de la porte 30 est branchée sur une entrée d'une porte NON-OU 31. Une autre entrée de la porte 31 est reliée à la sortie de la porte NON-ET 27a. Le signal présent sur la sortie de la porte NON-OU 31 s'exprime:

$$\overline{M + R + \overline{M}.\overline{R}.I_{t-1}}.$$

La sortie de la porte 31 est reliée à une entrée d'une porte NON-OU 32; une autre entrée de cette porte 32 est reliée à la sortie de la porte 21 et reçoit la valeur E.S.

La porte 32 donne sur sa sortie:

$$I = E.S.(M + R + \overline{M}.\overline{R}.I_{t-1}).$$

Le fonctionnement du dispositif de régulation équipé du circuit logique $H_a$ de la fig. 4 est semblable, dans son ensemble, à celui décrit avec référence à la réalisation des fig. 1 et 2.

Toutefois, la fonction supplémentaire introduite avec la variable M permet au conducteur du véhicule de donner rapidement la commande du papillon 3 au dispositif de régulation, même si la vitesse limite n'est pas atteinte.

Il suffit, en effet, que la pédale 2 se trouve dans la plage Δ et que le conducteur ferme le contact de marche 11 pour que la régulation prenne la commande du papillon 3. Si le véhicule roule, à ce moment, à une vitesse inférieure à la vitesse limite, l'accélération se prolongera et sera contrôlée par la régulation.

Dans l'exemple de réalisation envisagé, on a considéré essentiellement des moyens de liaison L électriques. Ces moyens de liaison pourraient être réalisés d'une autre manière, par exemple comme prévu dans le brevet FR 2 318 756 déjà cité, moyennant quelques adaptations.

**Revendications**

1. Dispositif de régulation de la vitesse d'un véhicule à moteur équipé de moyens de commande manuelle, du genre pédale d'accélérateur (2), destinés à être actionnés par un conducteur et reliés, par des moyens de liaison (L), à un organe de réglage (3), de la puissance du moteur comprenant:

— des moyens (7) sensibles à un paramètre de vitesse du véhicule, propres à émettre un signal de vitesse effective;
— des moyens comparateurs (8) pour comparer ce signal avec un signal de référence correspondant à une limite de vitesse déterminée;
— et des moyens de régulation (B) propres à agir sur l'organe de réglage (3) de la puissance du moteur afin de maintenir la vitesse du véhicule égale à la limite déterminée, en fonction du résultat de la comparaison effectuée par les moyens comparateurs (8), lorsque le dispositif de régulation est engagé, ces moyens de régulation (B) agissant, en outre, sur les susdits moyens de liaison (L) de telle sorte que, lorsque la régulation est engagée, le conducteur ait à maintenir les moyens de commande manuelle (2) dans une position déterminée, généralement la position de butée fin de course puissance maximale, l'ensemble étant tel que le conducteur peut reprendre la commande du moteur dans le sens d'une diminution de la puissance, par relâchement des moyens de commande manuelle (2), caractérisé par le fait qu'il comporte des moyens (14) pour définir une plage de débattement (Δ) des moyens de commande manuelle (2) à partir de la susdite position déterminée (m), et des moyens d'inhibition (15) des moyens de commande manuelle (2) agencés pour être en action lorsque:

– ces moyens de commande manuelle se trouvent dans la susdite plage (Δ),
– le dispositif de régulation est engagé.

2. Dispositif selon la revendication 1, caractérisé par le fait que les moyens d'inhibition (15) sont agencés pour être en action lorsque les conditions de conduite correspondent au passage des moyens de commande manuelle (2), à l'intérieur de la plage de débattement (Δ), d'une position associée à une puissance du moteur supérieure à celle demandée par les moyens de régulation, à une position associée à une puissance inférieure à celle demandée par ces moyens de régulation.

3. Dispositif selon la revendication 1 ou 2, caractérisé par le fait qu'il est agencé de telle sorte que lorsque les moyens de commande manuelle (2) se trouvent en dehors de la plage de débattement (Δ), le contrôle du véhicule est repris par le conducteur dès que la puissance du moteur correspondant à la position des moyens de commande manuelle devient inférieure à celle affichée par les moyens de régulation.

4. Dispositif selon l'une quelconque des revendications 1 à 3, comprenant des moyens de contact pour la mise en marche de ce dispositif de régulation, caractérisé par le fait qu'il comporte des moyens (Ha) sensibles à ces moyens de contact (11) et agencés pour donner le contrôle de l'organe de réglage (3) de la puissance du moteur aux moyens de régulation lorsque les moyens de commande manuelle (2) arrivent dans la plage de débattement (Δ) en se déplaçant dans le sens d'une augmentation de puissance, le véhicule roulant à une vitesse inférieure à la vitesse de référence et alors que la puissance du moteur associée à la position des moyens de commande manuelle reste inférieure à celle affichée par les moyens de régulation.

5. Dispositif selon l'une quelconque des revendications précédentes dans lequel les moyens de liaison (L) entre les moyens de commande manuelle et l'organe de réglage de la puissance du moteur sont électriques et comprennent:

– des moyens (P) pour élaborer un signal électrique de position représentant la position des moyens de commande manuelle;
– des moyens (8) agencés pour fournir, à leur sortie, un signal représentatif de la puissance demandée au moteur et dépendant de la différence entre la vitesse de référence et la vitesse réelle;
– des moyens (C) de comparaison des deux signaux;
– et un servo-moteur (G) sensible au signal de sortie des moyens de comparaison (C), propre à commander la position de l'organe (3) de réglage de puissance du moteur d'après ce signal de sortie;

caractérisé par le fait que les moyens (14) pour déterminer la plage de débattement (Δ) comprennent des moyens électriques de seuil (16) et des moyens (17) pour comparer le signal représentant la position des moyens de commande manuelle (2) avec le seuil, et pour fournir, sur leur sortie, un signal logique (S) correspondant à deux états différents selon que les moyens de commande manuelle (2) sont dans la plage de débattement (Δ) ou en dehors de cette plage.

6. Dispositif selon la revendication 5, caractérisé par le fait qu'il est agencé de telle sorte que le signal logique (S) correspond à un état logique 1 lorsque les moyens de commande manuelle (2) se trouvent dans la plage de débattement (Δ), et à un état logique 0 lorsque ces moyens de commande manuelle se trouvent en dehors de cette plage de débattement.

7. Dispositif selon l'une quelconque des revendications précédentes, caractérisé par le fait qu'il comprend des moyens comparateurs (C) propres à donner sur leur sortie la plus faible de deux tensions électriques qui leur sont appliquées, chacune de ces tensions correspondant, respectivement, à une position des moyens de commande manuelle (2) (et à une puissance du moteur associée à cette position) et à une puissance demandée par les moyens de régulation, la tension de sortie de ces moyens comparateurs commandant la position de l'organe de réglage (3) et la puissance du moteur, l'ouverture de cet organe de réglage (3) (et donc la puissance du moteur) étant d'autant plus grande que la tension de sortie est élevée.

8. Dispositif selon la revendication 5 ou 6, ou selon l'ensemble de la revendication 7 et de la revendication 5 ou 6, caractérisé par le fait que les moyens d'inhibition (15) des moyens de commande manuelle sont constitués par un circuit logique (H, Ha) formé par une combinaison de portes logiques, ce circuit étant agencé de manière à donner, sur sa sortie, un signal logique (I) pouvant prendre deux états, correspondant respectivement à une mise en œuvre de l'inhibition ou à une absence d'inhibition selon que les diverses conditions de conduite pour l'inhibition sont remplies ou non.

9. Dispositif selon la revendication 8, caractérisé par le fait que le signal fourni par le circuit logique (H, Ha) commande une porte, notamment formée par un transistor (18), de telle sorte que lorsque l'inhibition des moyens de commande manuelle (2) est souhaitée, un signal électrique associé à ces moyens de commande manuelle est porté à une valeur maximale, tandis que lorsque l'inhibition n'a pas lieu le signal électrique associé aux moyens de commande manuelle prend une valeur dépendant de la position de ces moyens de commande.

10. Dispositif selon la revendication 8, ou selon l'ensemble des revendications 8 et 9, caractérisé par le fait que le circuit logique (H, Ha) est agencé pour prélever trois paramètres de conduite formés par la consigne donnée par les moyens de commande manuelle (consigne 1), la consigne donnée aux moyens de régulation (consigne 2) et l'état E hors-service ou en service des moyens de régulation, et pour:

– comparer la consigne fournie aux moyens de régulation (consigne 2) avec la consigne fournie par les moyens de commande manuelle (consigne 1), le résultat de cette comparaison permettant de définir une variable logique R;
– comparer la consigne des moyens de commande manuelle (consigne 1) avec la plage de débattement (Δ) le résultat de cette comparaison permettant de définir une variable logique S,

la variable logique I fournie à la sortie du circuit logique étant une combinaison logique des trois variables E, R, S.

11. Dispositif selon la revendication 10, caractérisé par le fait que le circuit logique (H) est agencé pour donner, sur sa sortie, la variable I définie en algèbre de Boole par la relation:

$$I_t = E.S (R + \overline{R}. I_{t-1})$$

$I_{t-1}$ étant la valeur de la variable I avant le changement d'état ayant conduit à la valeur $I_t$.

12. Dispositif selon l'ensemble des revendications 4 et 10, caractérisé par le fait que le circuit logique (Ha) est agencé pour permettre l'introduction d'une fonction supplémentaire prenant l'état du contact (11) de mise en marche du dispositif de régulation comme paramètre supplémentaire M venant s'ajouter aux trois paramètres E, S, R, ce circuit logique (Ha) étant propre à donner sur sa sortie la variable logique I définie, en algèbre de Boole, par la relation:

$$I_t = E.S (M + \overline{R} + \overline{M}.\overline{R}.I_{t-1})$$

$I_{t-1}$ étant la valeur de la variable I avant le changement d'état ayant conduit à la valeur $I_t$.

**Claims**

1. Apparatus for controlling the speed of a motor vehicle, equipped with manual actuating means, of the accelerator pedal type (2), adapted to be operated by a driver and connected by connecting means (L) to a member (3) for controlling the engine power, comprising:

means (7) sensitive to a speed parameter of the vehicle and adapted to emit an effective speed signal;
comparator means (8) for comparing this signal with a reference signal corresponding to a given speed limit;
said control means (B) adapted to act on the engine power control member (3) in order to keep the vehicle speed at the given limit depending upon the result of the comparison carried out by the comparator means (8) when the control apparatus is engaged, said control means (B) also acting on the said connecting means (L) in such a manner that when the control apparatus is engaged the driver has to maintain the manual actuating means (2) in a given position, generally the maximum power end of travel abutment position, the complete arrangement being such that the driver can resume actuation of the engine in order to reduce the power by releasing the manual actuating means (2), characterised in that it comprises means (14) for defining a range of deflection (Δ) of the manual actuation means (2) from the said given position (m), and means (15) for inhibiting the manual actuation means (2) and adapted to be brought into operation when:

said manual actuation means are in the said range (Δ),
the control apparatus is engaged.

2. Apparatus according to claim 1, characterised in that the inhibition means (15) are adapted to be in operation when the driving conditions correspond to the changeover of the manual actuation means (2), inside the deflection range (Δ), from a position associated with an engine power higher than that required by the control means, to a position associated with a power below the power required by said control means.

3. Apparatus according to claim 1 or 2, characterised in that it is so arranged that when the manual actuation means (2) are outside the deflection range (Δ) the actuation of the vehicle is resumed by the driver as soon as the engine power corresponding to the position of the manual actuation means falls below the power set by the control means.

4. Apparatus according to any one of the claims 1 to 3, comprising contact means for starting the operation of the said control apparatus, characterised in that it comprises means (Ha) sensitive to said contact means (11) and so arranged as to pass the actuation of the engine power control member (3) to the control means when the manual actuation means (2) come within the range of deflection (Δ), by moving in the power increase direction, the vehicle running at a speed below the reference speed, and when the engine power associated with the position of the manual actuation means remains below that set by the control means.

5. Apparatus according to any one of the preceding claims, in which the connecting means (L) between the manual actuation means and the engine power control member are electric and comprise:

means (P) for preparing an electric position signal representing the position of the manual actuation means;
means (8) adapted to deliver at their output a signal representing the power required of the engine and dependent on the difference between the reference speed and the actual speed;
means (C) for comparing the two signals,
and a servo motor (G) sensitive to the output signal of the comparison means (C) and adapted to control the position of the engine power control member (3) according to said output signal,

characterised in that the means (14) for determining the range of deflection (Δ) comprise electric threshold means (16) and means (17) for comparing the signal representing the position of the manual actuation means with the threshold and for delivering, at their output, a logic signal (S) corresponding to two different states according as the manual actuation means (2) are in the range of deflection (Δ) or outside said range.

6. Apparatus according to claim 5, characterised in that it is so arranged that the logic signal (S) corresponds to a logic state 1 when the manual control means (2) are within the deflection range (Δ), and to a logic state (0) when said manual control means are outside said range.

7. Apparatus according to any one of the preceding claims, characterised in that it comprises comparator means (C) adapted to deliver at their output the lower of two voltages applied to them, each of these voltages corresponding respectively to a position of the manual actuation means (and an engine power associated with that position) and a power required by the control means, the output voltage of said comparator means controlling the position of the control member (3) and the engine power, the opening of said control member (3) (and hence the engine power) increasing with increasing output voltage.

8. Apparatus according to claim 5 or 6 or according to claim 7 together with claim 5 or 6, characterised in that the means (15) for inhibiting the manual actuation means comprise a logic circuit (H, Ha) formed by a combination of logic gates, said circuit being so arranged as to deliver at its output a logic signal (I) which may assume two states corresponding respectively to the use of inhibition or the absence of inhibition according as the various driving conditions governing inhibition are or are not satisfied.

9. Apparatus according to claim 8, characterised in that the signal delivered by the logic circuit (H, Ha) controls a gate, more particularly in the form of a transistor (18), so that when inhibition of the manual actuation means (2) is required an electric signal associated with said manual actuation means is brought to a maximum value while when inhibition does not take place the electric signal associated with the manual control means assumes a value dependent on the position of said actuation means.

10. Apparatus according to claim 8 or according to claims 8 and 9 together, characterised in that the logic circuit (H, Ha) is arranged to sample three driving parameters formed by the reference given by the manual actuation means (reference 1), the reference given to the control means (reference 2) and the condition E as to whether the control means are out of operation or in operation, and to:

compare the reference delivered to the control means (reference 2) with the reference delivered by the manual actuation means (reference 1), the result of this comparison allowing a logic variable R to be defined;

compare the reference from the manual actuation means (reference 1) with the range of deflection (Δ), the result of this comparison allowing a logic variable S to be defined, the logic variable I delivered at the output of the logic circuit being a logic combination of the three variables E, R, S.

11. Apparatus according to claim 10, characterised in that the logic circuit (H) is arranged to give at its output the variable I defined in Boolean algebra by the equation:

$$I_t = E.S. (R + R I_{t-1})$$

$I_{t-1}$ being the value of the variable I before the change of state resulting in the value $I_t$.

12. Apparatus according to claims 4 and 10 together, characterised in that the logic circuit (Ha) is so arranged as to allow introduction of a supplementary function taking the state of the contact (11) for starting the operation of the control apparatus as a supplementary parameter M added to the three parameters E, S, R, said logic circuit (Ha) being adapted to give at its output the logic variable I defined in Boolean algebra by the equation:

$$I_t = E.S. (M + \overline{R} + \overline{M}.\overline{R}.I_{t-1})$$

$I_{t-1}$ being the value of the variable I before the change of state resulting in the value $I_t$.

**Patentansprüche**

1. Vorrichtung zur Geschwindigkeitsregelung eines Motorfahrzeugs, welches manuelle von dem Fahrer bedienbare Steuermittel, z.B. in Form eines Beschleunigungspedals (2), aufweist, die über Verbindungsmittel (L) mit einem Organ (3) zur Regelung der Motorleistung verbunden sind,

– mit Mitteln (7) zur Erfassung eines Fahrzeuggeschwindigkeitsparameters und zur Abgabe eines der effektiven Geschwindigkeit entsprechenden Signals,
– mit einer Komparatoreinrichtung (8) zum Vergleichen dieses Signals mit einem einer vorbestimmten Grenzgeschwindigkeit entsprechenden Signal,
– sowie mit einer Regeleinrichtung (B), die mit dem Organ (3) zur Regelung der Motorleistung wirkungsmässig derart verbunden ist, dass die Geschwindigkeit des Fahrzeugs in Abhängigkeit von dem Ergebnis des von der Komparatoreinrichtung (8) durchgeführten Vergleichs auf einem der vorbestimmten Grenzgeschwindigkeit entsprechenden Wert gehalten wird, wenn die Regelungsvorrichtung sich in Betrieb befindet, wobei die Regeleinrichtung (B) ausserdem derart auf die genannten Verbindungsmittel (L) einwirkt, dass der Fahrer bei eingeschalteter Regelung die manuellen Steuermittel (2) in einer Position, vorzugsweise in der der maximalen Motorleistung zugeordneten Endanschlagsposition, halten muss,

wobei die Gesamtanordnung so getroffen ist, dass der Fahrer durch Zurücknehmen der manuellen Steuermittel (2) wieder die Steuerung in Richtung auf eine Verringerung der Motorleistung hin übernehmen kann, gekennzeichnet durch

– Mittel (14) zur Festlegung eines von der genannten vorbestimmten Position (m) aus beginnenden Spielraums der manuellen Steuermittel (2) in Form eines Schwankungsbereichs (Δ)
– sowie eine Inhibitionseinrichtung (15) zur Inhibierung der manuellen Steuermittel (2), welche derart ausgebildet ist, dass die Inhibierung dann stattfindet, wenn

– die manuellen Steuermittel (2) sich innerhalb des genannten Schwankungsbereichs (Δ) befinden
– und die Regelungsvorrichtung sich in Betrieb befindet.

2. Vorrichtung nach Anspruch 1, dadurch gekennzeichnet, dass die Inhibitionseinrichtung (15) aktiviert ist, wenn die Fahrbetriebsbedingungen einem innerhalb des genannten Schwankungsbereichs (Δ) erfolgenden Übergang der manuellen Steuermittel (2) von einer Position, die einer über der von der Regeleinrichtung (B) geforderten Motorleistung liegenden Motorleistung zugeordnet ist, zu einer Position, die einer unter der von der Regeleinrichtung (B) geforderten Motorleistung liegenden Motorleistung zugeordnet ist, entsprechen.

3. Vorrichtung nach Anspruch 1 oder 2, dadurch gekennzeichnet, dass bei einer Position der manuellen Steuermittel (2) ausserhalb des genannten Schwankungsbereichs (Δ) die Steuerung des Fahrzeugs wieder von dem Fahrer übernommen wird, sobald die der Position der manuellen Steuermittel (2) entsprechende Motorleistung unter die durch die Regeleinrichtung (B) bestimmte Motorleistung absinkt.

4. Vorrichtung nach einem der Ansprüche 1 bis 3, mit einer Kontakteinrichtung (11) zur Inbetriebnahme der Regelungsvorrichtung, dadurch gekennzeichnet, dass auf diese Kontakteinrichtung (11) ansprechende Mittel (Ha) vorgesehen sind, die die Steuerung des Organs (3) zur Regelung der Motorleistung an die Regeleinrichtung (B) übergeben, wenn die manuellen Steuermittel (2) bei ihrer Verschiebung in Richtung auf höhere Motorleistung hin in den genannten Schwankungsbereich (Δ) gelangen, während das Fahrzeug mit einer unterhalb der Referenzgeschwindigkeit liegenden Geschwindigkeit fährt, und wenn die der Position der manuellen Steuermittel (2) zugeordnete Motorleistung unter der durch die Regeleinrichtung (B) bestimmten Motorleistung bleibt.

5. Vorrichtung nach einem der vorhergehenden Ansprüche, bei der die zwischen den manuellen Steuermitteln und dem Organ (3) zur Regelung der Motorleistung angeordneten Verbindungsmittel (L) elektrische Mittel sind und folgende Teile beinhalten:

– eine Einrichtung (P) zur Erzeugung eines die Position der manuellen Steuermittel (2) kennzeichnenden elektrischen Positionssignals,
– eine Einrichtung (8), die an ihrem Ausgang ein Signal liefert, das für die erforderliche Motorleistung kennzeichnend ist und das von der Differenz zwischen der Referenzgeschwindigkeit und der tatsächlichen Geschwindigkeit abhängt,
– eine Vergleichereinrichtung (C) für den Vergleich der beiden Signale
– sowie einen auf das Ausgangssignal der Vergleichereinrichtung (C) ansprechenden Servomotor (G) zur Steuerung des Organs (3) zur Regelung der Motorleistung in Abhängigkeit von diesem Ausgangssignal,

dadurch gekennzeichnet, dass die Mittel (14) zur Festlegung des genannten Schwankungsbereichs (Δ) elektrische Schwellwertmittel (16) sowie Mittel (17) beinhalten, in denen die Position der manuellen Steuermittel (2) mit dem Schwellwert verglichen wird und die an ihrem Ausgang ein logisches Signal (S) liefern, das in Abhängigkeit davon, ob die manuellen Steuermittel (2) sich innerhalb oder ausserhalb des Schwankungsbereichs (Δ) befinden, zwei unterschiedliche Zustände einnimmt.

6. Vorrichtung nach Anspruch 5, dadurch gekennzeichnet, dass das logische Signal (S) dem logischen Zustand «1» entspricht, wenn die manuellen Steuermittel (2) sich innerhalb des Schwankungsbereichs (Δ) befinden, und dem logischen Zustand «0», wenn die manuellen Steuermittel (2) sich ausserhalb dieses Schwankungsbereichs (Δ) befinden.

7. Vorrichtung nach einem der vorhergehenden Ansprüche, dadurch gekennzeichnet, dass ein Vergleicher (C) vorgesehen ist, der an seinem Ausgang die schwächere von zwei an ihm anliegenden Spannungen abgibt, wobei jede dieser Spannungen einer Position der manuellen Steuermittel (2) (und einer dieser Position zugeordneten Motorleistung) bzw. einer von der Regeleinrichtung (B) geforderten Motorleistung entspricht, und dass die Ausgangsspannung des Vergleichers (C) die Position des Organs (3) zur Regelung der Motorleistung steuert, wobei die Öffnung dieses Organs (3) (und damit die Motorleistung) umso grösser ist, je höher die genannte Ausgangsspannung ist.

8. Vorrichtung nach Anspruch 5 oder 6 oder nach der aus Anspruch 7 und Anspruch 5 oder 6 bestehenden Kombination, dadurch gekennzeichnet, dass die Inhibitionseinrichtung (15) zur Inhibierung der manuellen Steuermittel (2) von einer logischen Schaltung (H, Ha) gebildet ist, die aus einer Kombination von logischen Gattern besteht und die an ihrem Ausgang in Abhängigkeit davon, ob die verschiedenen Betriebsbedingungen für die Inhibition erfüllt sind oder nicht erfüllt sind, an ihrem Ausgang ein logisches Signal (I) liefert, durch welches die Inhibitionswirkung veranlasst bzw. nicht veranlasst wird.

9. Vorrichtung nach Anspruch 8, dadurch gekennzeichnet, dass das von der logischen Schaltung (H, Ha) gelieferte Signal eine vorzugsweise von einem Transistor (18) gebildete Torschaltung derart steuert, dass dann, wenn die Wirkung der manuellen Steuermittel (2) inhibiert werden soll, ein diesen manuellen Steuermitteln zugeordnetes elektrisches Signal auf einen Maximalwert gebracht wird, während das den manuellen Steuermitteln (2) zugeordnete elektrische Signal einen von der Position der Steuermittel abhängigen Wert einnimmt, wenn die Inhibition nicht stattfindet.

10. Vorrichtung nach Anspruch 8 oder nach der aus den Ansprüchen 8 und 9 bestehenden Kombination, dadurch gekennzeichnet, dass die logische Schaltung (H, Ha) derart ausgebildet ist, dass sie drei Fahrbetriebsparameter aufnehmen kann, nämlich

die von den manuellen Steuermitteln (2) gelieferte Anweisung (Anweisung 1),
die von der Regeleinrichtung (B) gelieferte Anweisung (Anweisung 2)
sowie den Einschalt- oder dem Ausschaltzustand E der Regeleinrichtung, und dass sie (H, Ha)

- die von der Regeleinrichtung gelieferte Anweisung (Anweisung 2) mit der Anweisung der manuellen Steuermittel (2) (Anweisung 1) vergleicht, wobei das Resultat dieses Vergleichs die Bestimmung einer logischen Variablen R ermöglicht,
- und die von den manuellen Steuermitteln gelieferte Anweisung (Anweisung 1) mit dem genannten Schwankungsbereich ($\Delta$) vergleicht, wobei das Resultat dieses Vergleichs eine logische Variable S bestimmt, und dass die an dem Ausgang der logischen Schaltung gelieferte logische Variable I eine logische Kombination der drei Variablen E, R und S darstellt.

11. Vorrichtung nach Anspruch 10, dadurch gekennzeichnet, dass die logische Schaltung (H) an ihrem Ausgang die Variable I erzeugt, die in Bool'scher Algebra durch die Relation

$$I_t = E.S.(R + \overline{R}.I_{t-1})$$

definiert ist, wobei $I_{t-1}$ den Wert der Variablen I vor der Zustandsänderung bedeutet, die zu dem Wert $I_t$ geführt hat.

12. Vorrichtung nach der aus den beiden Ansprüchen 4 und 10 bestehenden Kombination, dadurch gekennzeichnet, dass die logische Schaltung (Ha) derart ausgebildet ist, dass sie die Einführung einer Hilfsfunktion erlaubt, indem der Zustand der Kontakteinrichtung (11) zur Einschaltung der Regelungsvorrichtung als Hilfsparameter M herangezogen und den drei Parametern E, S und R hinzugefügt wird, und dass die logische Schaltung (Ha) an ihrem Ausgang die logische Variable I erzeugt, die in Bool'scher Algebra durch die Relation

$$I_t = E.S.(M + R + \overline{M}.\overline{R}.I_{t-1})$$

definiert ist, wobei $I_{t-1}$ den Wert der Variablen I vor der Zustandsänderung bedeutet, die zu dem Wert $I_t$ geführt hat.

**0 057 129**

Fig.1.

Fig.2.

17

Fig.3a.  E=1 R=0 S=0

Fig.3b.  E=1 R=1 S=0

Fig.3e.  E=0 R=0 S=1

Fig.3d.  E=1 R=0 S=1

Fig.3c.  E=1 R=1 S=1

Fig.4.